## Europäisches Patentamt
## European Patent Office
## Office européen des brevets

(11) Numéro de publication: **0 031 172**
**A1**

(12) # DEMANDE DE BREVET EUROPEEN

(21) Numéro de dépôt: **80201005.8**

(22) Date de dépôt: **22.10.80**

(51) Int. Cl.³: **C 22 B 60/02**

(30) Priorité: **05.11.79 LU 81850**

(43) Date de publication de la demande:
**01.07.81 Bulletin 81/26**

(84) Etats Contractants Désignés:
**BE FR GB IT NL**

(71) Demandeur: **METALLURGIE HOBOKEN-OVERPELT**
Société anonyme dite:
**8, rue Montagne du Parc**
**B-1000 Bruxelles(BE)**

(71) Demandeur: **SOCIETE DE PRAYON Société anonyme**
dite:
**16, Grand-Rue**
**B-4940 Forêt-Trooz(BE)**

(72) Inventeur: **de Schepper, Achille**
**Esdoornlaan 8**
**B-2451 Lichtaart-Kasterlee(BE)**

(74) Mandataire: **Saelemaekers, Juul et al,**
**METALLURGIE HOBOKEN-OVERPELT A. Greinerstraat**
**14**
**B-2710 Hoboken(BE)**

(54) Procédé de ré-extraction réductrice de l'uranium d'un extractant organique.

(57) Un procédé amélioré de ré-extraction en plusieurs étages de l'uranium d'un extractant organique comprenant un acide dialkylphosphorique et un oxyde de trialkylphosphine, à l'aide d'une solution aqueuse d'acide phosphorique contenant des ions ferreux, chaque étage comprenant les étapes suivantes :
- (a) la mise en contact de l'extractant organique avec la phase aqueuse,
- (b) la séparation de la phase organique appauvrie en uranium de la phase aqueuse uranifère,
- (c) le recyclage d'une fraction de la phase aqueuse résultant de l'étape (b) vers l'étape (a), et
- (d) l'ajustement de la teneur en ions ferreux de la fraction qu'on recycle.

On ajuste la teneur en ions ferreux de la fraction recyclée en mettant la phase aqueuse résultant de l'étape (b) en contact avec du fer métallique, chaque fois que la teneur en ions ferreux de ladite fraction descend en-dessous d'une valeur prédéterminée.

- 1 -

Procédé de ré-extraction réductrice de l'uranium d'un extractant organique.

La présente invention se rapporte à un procédé pour ré-extraire en plusieurs étages, dans une batterie de mélangeurs-décanteurs, l'uranium d'un extractant comprenant un acide dialkylphosphorique et un oxyde de trialkylphosphine dissous dans un solvant organique non miscible à l'eau, à l'aide d'une solution aqueuse d'acide phosphorique contenant des ions ferreux, chaque étage comprenant les étapes suivantes :

(a) on met l'extractant organique en contact avec la solution aqueuse d'acide phosphorique, une fraction de cette solution aqueuse étant de la solution recyclée déjà chargée d'uranium, en produisant ainsi une phase organique appauvrie en uranium et une phase aqueuse d'acide phosphorique enrichie en uranium et en ions ferriques et appauvrie en ions ferreux,

(b) on sépare la phase organique appauvrie en uranium de la phase aqueuse uranifère,

(c) on recycle une fraction de la phase aqueuse uranifère résultant de l'étape (b) vers l'étape (a), et

(d) on ajuste la teneur en ions ferreux de la fraction qu'on recycle.

Un tel procédé est décrit dans le brevet américain N° 3.737.513. Dans ce procédé connu, on ajuste la teneur en ions ferreux de la fraction qu'on recycle, en soumettant cette fraction à une réduction électrolytique de façon à transformer les ions ferriques y contenus en ions ferreux.

Or, l'incorporation d'une opération électrolytique dans un procédé d'extraction liquide-liquide utilisant des liquides organiques volatils et inflammables, pose de très graves problèmes de sécurité, la moindre étincelle venant en contact avec de la vapeur organique pouvant causer une catastrophe.

L'objet de la présente invention est de procurer un procédé tel que défini ci-dessus, qui évite ces problèmes de sécurité.

A cet effet, selon l'invention on ajuste la teneur en ions ferreux de la fraction qu'on recycle, en mettant la phase aqueuse résultant de l'étape (b) en contact avec du fer métallique, chaque fois que la teneur en ions ferreux de la fraction recyclée descend en-dessous d'une valeur prédéterminée.

Il est à noter qu'il est déjà connu par le brevet américain N° 3.711.591 d'ajuster la teneur en ions ferreux d'une solution d'acide phosphorique contenant des ions ferriques soit en soumettant cette solution à une réduction électrolytique, soit en traitant cette solution par du fer métallique, et d'utiliser ultérieurement la solution ainsi obtenue pour la ré-extraction réductrice de l'uranium d'un extractant comprenant un acide dialkylphosphorique et un oxyde de trialkylphosphine dissous dans un solvant organique non miscible à l'eau. Cependant, il s'agit dans ce procédé connu simplement de la préparation d'une solution de départ, ce procédé ne prévoyant, à la différence des procédés de la présente invention et du brevet américain N° 3.737.513 susdit, aucune régénération d'ions ferreux au cours du processus de ré-extraction et présentant de ce fait le grave inconvénient de requérir l'exécution de la ré-extrac-tion sous atmosphère inerte (voir article intitulé "Recovery of uranium from wet-process phosphoric acid " by F.J. Hurst  et al dans la revue "Industrial and Engineering Chemistry : Process Design and Development", volume 11, n° 1, 1972, page 122, colonne droite, paragraphe 2.

Il va de soi qu'on utilise dans le procédé de l'invention une masse de fer ayant une grande surface spécifique telle du fer sous forme de pastilles ou de granules.

D'autres détails et particularités de l'invention ressortiront de la description d'un mode de réalisation du procédé de l'invention, donnée ci-après à titre d'exemple non limitatif et avec référence aux dessins ci-annexés.

Dans ces dessins :
- la figure 1 représente le schéma d'une installation pour réaliser le procédé de la présente invention, cette installation comprenant essentiellement une batterie de trois mélangeurs-décanteurs identiques;
- la figure 2 représente une vue en plan d'un de ces mélangeurs-décanteurs;
- et la figure 3 représente une vue en perspective de la sortie d'un de ces mélangeurs-décanteurs, les parois extérieures de l'appareil ayant été partiellement omises pour le besoin de la clarté.

Dans les différentes figures, les mêmes éléments sont désignés par les mêmes chiffres de référence.

On doit ré-extraire l'uranium d'un extractant organique constitué d'une solution de 0,5 M d'acide di-(2-éthyl-hexyl) phosphorique (D2EHPA) et de 0,075 M d'oxyde de trioctylphosphine (TOPO) dans un diluant aliphatique inerte ("ESCAID-110" de la Société Esso Chemical Cy).

Cet extractant, qui contient 235 mg/l d'U$^{6+}$, a été utilisé pour extraire l'uranium d'acide phosphorique produit par lixiviation à l'acide sulfurique de roches phosphatées uranifères.

On effectue la ré-extraction avec une solution aqueuse d'acide phosphorique à 30% de $P_2O_3$ contenant 12 g/l de $Fe^{2+}$. On prépare cette solution en faisant passer à 50°C de l'acide phosphorique, produit par lixiviation à l'acide sulfurique de roches phosphatées uranifères et dont l'uranium n'a pas été extrait, à travers un lit de pastilles de fer.

On contrôle par voie potentiométrique la teneur en $Fe^{2+}$ de la solution ayant passé ce lit, et on fait repasser cette solution à travers le lit, lorsque sa teneur en $Fe^{2+}$ est inférieure à 12 g/l.

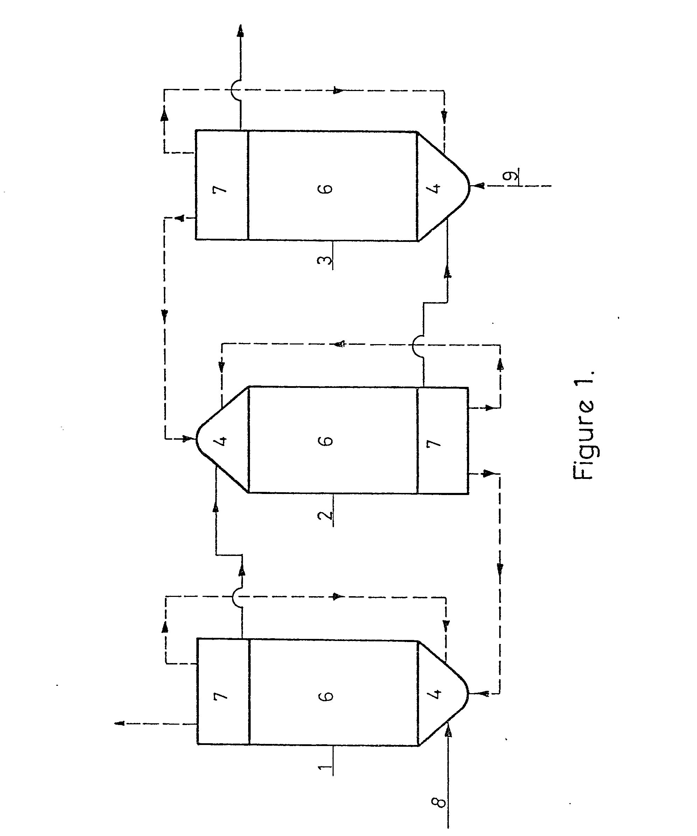

On effectue la ré-extraction en trois étages en utilisant à cet effet trois mélangeurs-décanteurs 1, 2 et 3 identiques. Chaque mélangeur-décanteur comporte d'une façon connue en soi un compartiment de mélange 4 muni d'un agitateur 5 à effet de pompage, un compartiment de décantation 6 et un compartiment de sortie 7 pour l'évacuation des phases séparées. On voit sur la figure 1 que l'extractant à désuraner 8, dont l'écoulement est représenté par une ligne continue, entre dans l'installation par le compartiment de mélange 4 du mélangeur-décanteur 1 et quitte l'installation par le compartiment de sortie 7 du mélangeur-décanteur 3, tandis que la solution de ré-extraction 9, dont l'écoulement est représenté par une ligne discontinue, entre dans l'installation par le compartiment de mélange 4 du mélangeur-décanteur 3 et quitte l'installation par le compartiment de sortie 7 du mélangeur-décanteur 1. L'extractant à désuraner 8 est introduit dans l'installation à un débit de 200 l/heure et à une température de 35°C, et la solution de ré-extraction 9, à un débit de 4,8 l/heure et à une température de 50°C.

Chaque compartiment de sortie 7 comprend d'une façon connue en soi une gouttière 10 pour l'évacuation de la phase organique 8 (voir flèches O) et une chambre de siphonage 11, muni d'un siphon 12, pour l'évacuation de la phase aqueuse 9 (voir flèches A).

Etant donné que le rapport phase organique : phase aqueuse est de 200 : 4,8 et qu'il faut maintenir la phase aqueuse comme phase continue pendant la ré-extraction, on évacue seulement une partie mineure de la phase aqueuse 9 arrivant, en-dessous de la gouttière 10, dans la chambre de siphonage 11, par le siphon 12 et on recycle le reste vers le compartiment de mélange 4 du même mélangeur-décanteur (voir flèche AR), comme cela se faisait déjà dans les procédés de l'art antérieur mentionnés ci-dessus. Dans le cas de la présente invention, ce recyclage se fait via une conduite 13 reliant la chambre de siphonage 11 avec le compartiment de mélange 4, et par l'effet de pompage exercé par l'agitateur 5. La conduite 13 est munie d'une vanne 14 permettant de régler le débit du courant recyclé. On règle ce débit de façon à obtenir un rapport phase organique : phase aqueuse de 1 : 2 dans le compartiment de mélange 4, ce qui veut dire que le débit à travers la conduite 13 est à peu près 30 fois plus élevé que le débit à travers le siphon 12.

Dans la conduite de recyclage 13 se trouve une cellule 15 pour mesurer en continu le potentiel de la phase aqueuse 9 recyclée. Dès que cette cellule 15 mesure un potentiel trop élevé indiquant une teneur trop faible en $Fe^{2+}$ de la phase recyclée, la cellule commande un dispositif connu en soi et non-représenté qui fait plonger un panier 16, rempli de pastilles de fer 17, dans la chambre de siphonage 11 près de l'embouchure 18 de la conduite 13 dans la chambre 11, c'est-à-dire à l'endroit où le courant dans la chambre 11 est le plus fort. La teneur en $Fe^{2+}$ de la phase recyclée va maintenant augmenter jusqu'à ce que la cellule 15 va mesurer un potentiel trop faible indiquant une teneur trop élevée en $Fe^{2+}$, et fera sortir moyennant le dispositif sus-mentionné le panier 16 de la chambre de siphonage 11. Dans le présent cas il est indiqué de maintenir dans la phase aqueuse recyclée dans le mélangeur-décanteur 1 une teneur en $Fe^{2+}$ allant de 18 à 22 g/l, dans celle recyclée

dans le mélangeur-décanteur 2 une teneur en $Fe^{2+}$ allant de 14 à 18 g/l et dans celle recyclée dans le mélangeur-décanteur 3 une teneur en $Fe^{2+}$ allant de 12 à 14 g/l.

A cet effet, on fait plonger le panier 16 dans chacun des mélangeurs-décanteurs 1, 2 et 3 dès que le potentiel de la phase aqueuse recyclée y monte jusqu'à 450 mV et on le fait sortir dès que ce potentiel tombe jusqu'à 300 mV. On obtient ainsi, par des moyens particulièrement simples et économiques, à chaque instant et dans chaque compartiment de mélange 4 une teneur appropriée en $Fe^{2+}$.

On maintient dans les trois mélangeurs-décanteurs une température allant de 45 à 55°C. A cet effet, chacune des conduites de recyclage 13 est entourée d'un élément de chauffe 19, par exemple à la vapeur. Cette température d'environ 50°C est idéale, parce que le coefficient de répartition d'$U^{4+}$ entre la phase aqueuse et la phase organique est alors élevé et la réaction entre la phase aqueuse et le fer métallique, rapide.

Les pastilles 17 sont des déchets de poinçonnage d'acier au carbone. Elles ont un diamètre moyen d'environ 5 mm et une épaisseur moyenne d'environ 2 mm.

L'extractant désuranié quittant l'installation à un débit de 200 l/h par le compartiment de sortie 7 du mélangeur-décanteur 3 présente une teneur en U de 0,01 g/l. Cet extractant peut être ré-utilisé pour extraire l'uranium d'acide phosphorique produite par lixiviation à l'acide sulfurique de roches phosphatées uranifères.

La phase aqueuse uranifère quittant l'installation à un débit de 4,8 l/h par le compartiment de sortie 7 du mélangeur-décanteur 1 présente une teneur en U ($U^{4+}$) de 9,37 g/l et une teneur en fer ($Fe^{2+} + Fe^{3+}$) de 22,5 g/l. On peut récupérer l'uranium de cette phase aqueuse par un procédé bien connu, qui consiste à oxyder l'$U^{4+}$ en $U^{6+}$, à

extraire l'$U^{6+}$ avec un extractant constitué d'une solution de $D_2EHPA$ et de TOPO dans un diluant aliphatique inerte et à ré-extraire l'$U^{6+}$ par une solution aqueuse de $(NH_4)_2CO_3$.

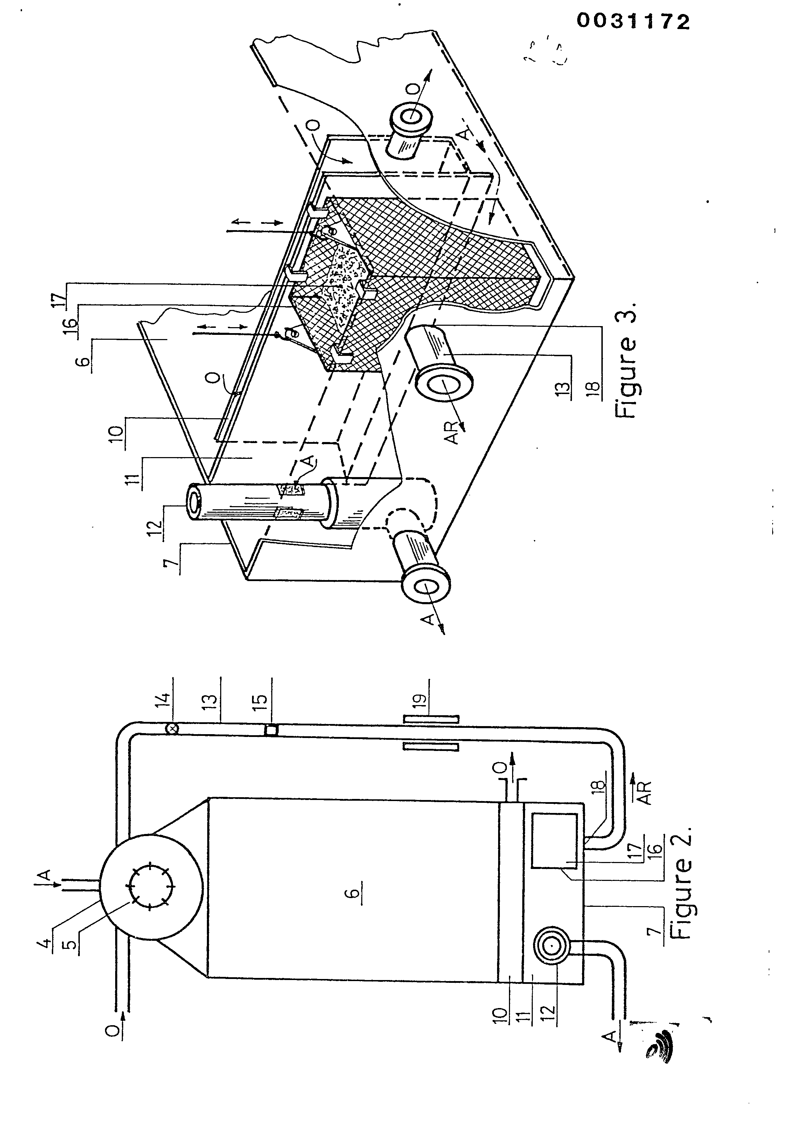

Il est à noter qu'il est particulièrement avantageux de faire plonger le panier 16, rempli de pastilles de fer 17, dans la chambre 11 près de l'embouchure 18 de la conduite 13 dans la chambre 11, comme il a été décrit plus haut, car cette façon d'opérer permet de profiter au maximum de l'hydrogène résultant, ensemble avec des ions $Fe^{2+}$, de la réaction entre le fer métallique et la phase aqueuse. On aurait pu s'attendre à ce que cet hydrogène se dégage en masse de la phase aqueuse près de l'endroit même où il est généré et se perde ainsi, ce qui arrive effectivement lorsqu'on fait plonger le panier 16 dans la chambre 11 à une distance substantielle de l'embouchure 18 de la conduite 13, par exemple près du siphon 12. Or, on a constaté que, lorsqu'on opère de la façon décrite plus haut, la presque totalité de cet hydrogène est entraînée sous la forme de très fines bulles par le courant de recyclage vers le compartiment de mélange 4, où il sert en partie pour réduire des ions $U^{6+}$ et $Fe^{3+}$ et en partie pour constituer une couverture d'atmosphère protectrice retardant l'aspiration de l'oxygène de l'air par les liquides agités. Il s'ensuit que l'on doit consommer moins de fer métallique et que l'on sort de l'installation une phase aqueuse uranifère moins riche en fer. C'est ainsi que dans une installation industrielle, où le rapport entre le volume du panier et le volume de la chambre de siphonage est beaucoup plus faible que ne le ferait croire la figure 3 (qui se rapporte à une installation pilote), le déplacement du panier de son endroit préféré près de l'embouchure de la conduite de recyclage dans la chambre de siphonage vers le siphon sur une distance de 0,5 m fait s'accroître la consommation de fer de 8%.

Il est également à noter qu'il est particulièrement avantageux d'opérer de façon qu'on sorte de l'installation une phase aqueuse uranifère dont la teneur totale en fer ($Fe^{2+}$ et $Fe^{3+}$) soit inférieure à 35 g/l, c'est-à-dire de veiller à ce que, d'une part, la teneur en fer de la solution aqueuse d'acide phosphorique, que l'on introduit dans la batterie de mélangeurs-décanteurs, soit suffisamment faible, et que, d'autre part, les ajoutes de fer pendant la ré-extraction soient suffisamment faibles, pour que la teneur en fer de la phase aqueuse uranifère, que l'on sort de la batterie de mélangeurs-décanteurs, reste inférieure à 35 g/l.

En effet, il a été trouvé que, si on opère de façon que la teneur totale en fer de la phase aqueuse uranifère sortant de l'installation ne soit pas inférieure à 35 g/l, mais par exemple égale à 48 g/l, il y a après 4 semaines de fonctionnement de l'installation, formation dans les mélangeurs-décanteurs d'un précipité très volumineux et très ennuyeux constitué essentiellement de phosphate de fer.

Revendications de brevet

1. Procédé pour ré-extraire en plusieurs étages, dans une
batterie de mélangeurs-décanteurs, l'uranium d'un extractant comprenant un acide dialkylphosphorique et un oxyde
de trialkylphosphine dissous dans un solvant organique non
miscible à l'eau, à l'aide d'une solution aqueuse d'acide
phosphorique contenant des ions ferreux, chaque étage
comprenant les étapes suivantes :

    (a) on met l'extractant organique en contact avec la
        solution aqueuse d'acide phosphorique, une fraction de cette solution aqueuse étant de la solution recyclée déjà chargée d'uranium, en produisant ainsi une phase organique appauvrie en
        uranium et une phase aqueuse d'acide phosphorique
        enrichie en uranium et en ions ferriques et
        appauvrie en ions ferreux,

    (b) on sépare la phase organique appauvrie en uranium
        de la phase aqueuse uranifère,

    (c) on recycle une fraction de la phase aqueuse
        uranifère résultant de l'étape (b) vers l'étape
        (a), et

    (d) on ajuste la teneur en ions ferreux de la fraction
        qu'on recycle,

ce procédé étant caractérisé en ce qu'on ajuste la teneur
en ions ferreux de la fraction qu'on recycle, en mettant
la phase aqueuse résultant de l'étape (b) en contact avec
du fer métallique, chaque fois que la teneur en ions
ferreux de la fraction recyclée descend en-dessous d'une
valeur prédéterminée.

2. Procédé selon la revendication 1, caractérisé en ce
qu'on mesure en continu le potentiel électrochimique de la
fraction recyclée et on fait agir le potentiel mesuré sur
la durée du contact entre le fer et la phase aqueuse
résultant de l'étape (b).

3. Procédé selon la revendication 1 ou 2, caractérisé en ce qu'on utilise des mélangeurs-décanteurs comportant chacun un compartiment de mélange muni d'un agitateur à effet de pompage, un compartiment de décantation, une gouttière pour évacuer de la phase organique décantée et une chambre de siphonage munie d'un siphon pour évacuer de la phase aqueuse décantée, cette chambre de siphonage étant reliée par une conduite de recyclage au compartiment de mélange, et on met la phase aqueuse résultant de l'étape (b) en contact avec du fer métallique dans la chambre de siphonage susdite près de l'embouchure de la conduite susdite dans cette chambre.

4. Procédé selon la revendication 1, 2 ou 3, caractérisé en ce que la teneur en fer de la solution aqueuse d'acide phosphorique, introduite dans la batterie de mélangeurs-décanteurs, et la valeur prédéterminée susdite sont suffisamment faibles pour que la teneur en fer de la phase aqueuse uranifère sortant de la batterie soit inférieure à 35 g/l.

5. Procédé selon la revendication 1, 2, 3 ou 4, caractérisé en ce qu'on opère à une température allant de 45 à 55°C.

Figure 1.

Figure 2.

Figure 3.

0031172

Office européen
des brevets

**RAPPORT DE RECHERCHE EUROPEENNE**

EP 80 20 1005.8

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| A,D | US - A - 3 711 591 (F.J. HURST et al.) | | C 22 B 60/02 |
| | -- | | |
| A,D | US - A - 3 737 513 (T.K. WIEWIOROWSKI et al.) | | |
| | -- | | |
| A,D | INDUSTRIAL AND ENGINEERING CHEMISTRY PROCESS DESIGN AND DEVELOPMENT, Vol. 11, No. 1, 1972 Washington F.J. HURST et al. "Recovery of Uranium from Wet-Process Phosphoric Acid" pages 122 à 128 | | |
| | -- | | **DOMAINES TECHNIQUES RECHERCHES (Int. Cl.³)** |
| A | US - A - 3 214 239 (W.C. HAZEN et al.) | | C 01 G 43/00 |
| | -- | | C 22 B 60/02 |
| A | US - A - 3 835 214 (F.J. HURST et al.) | | |
| | -- | | |
| A | US - A - 4 105 741 (T.K. WIEWIOROWSKI et al.) | | |
| | -- | | |
| A | FR - A - 2 070 722 (ETAT D'ISRAEL) | | |
| | -- | | **CATEGORIE DES DOCUMENTS CITES** |
| A | FR - A1 - 2 249 961 (WESTINGHOUSE ELEC-TRIC) | | X: particulièrement pertinent |
| | ---- | | A: arrière-plan technologique |
| | | | O: divulgation non-écrite |
| | | | P: document intercalaire |
| | | | T: théorie ou principe à la base de l'invention |
| | | | E: demande faisant interférence |
| | | | D: document cité dans la demande |
| | | | L: document cité pour d'autres raisons |
| | | | &: membre de la même famille, document correspondant |

| | Le présent rapport de recherche a été établi pour toutes les revendications | |
|---|---|---|
| Lieu de la recherche | Date d'achèvement de la recherche | Examinateur |
| Berlin | 27-03-1981 | SUTOR |

OEB Form 1503.1    06.78